(19) Europäisches Patentamt
European Patent Office
Office européen des brevets

(11) **EP 2 237 495 A1**

(12) **EUROPEAN PATENT APPLICATION**

(43) Date of publication:
**06.10.2010 Bulletin 2010/40**

(51) Int Cl.:
**H04L 12/56** *(2006.01)*

(21) Application number: **09250991.8**

(22) Date of filing: **31.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventor: **The designation of the inventor has not yet been filed**<br><br>(74) Representative: **Geffen, Nigel Paul et al**<br>**BT Group Legal**<br>**Intellectual Property Department**<br>**PP C5A, BT Centre**<br>**81 Newgate Street**<br>**London**<br>**EC1A 7AJ (GB)** |
| (71) Applicant: **BRITISH TELECOMMUNICATIONS public limited company**<br>**London**<br>**EC1A 7AJ (GB)** | |

(54) **Path generation in a packet network**

(57)   An embodiment of the present invention provides an alternative path generation technique which is able to take into account changes in network circumstances, such as link failures, or changes in traffic patterns, by making use of a congestion measure for each operational link in the network, and then applying a route finding algorithm (such as the conventional Open Shortest Path First (OSPF) algorithm) to find paths, with the congestion measures input into the algorithm as the path length values. The route-finding algorithm is then able to determine candidate paths in dependence not on path length, as is conventional, but on the present load in the network, and in particular between IEPs, as measured by the congestion measures. As the congestion measures implicitly take into account present traffic load, as well as link failures, and the like, an adaptive candidate path generation technique is provided, which is able to find alternative paths for IEPs in dependence on present network conditions. Optionally, in some embodiments, the candidate paths are subject to a threshold test against a property thereof, and if the test is passed then the candidate path is implemented in the network, and becomes a path between an IEP onto which traffic can then be routed.

| Link *l* | Queue Size *s* | Congestion Price *P(l)* |
|---|---|---|
| 1 | 36 | 4 |
| 2 | 124 | 95 |
| 3 | 52 | 8 |
| 4 | 20 | 2 |
| 5 | 86 | 20 |

FIGURE 4

EP 2 237 495 A1

## Description

Technical Field

The present invention relates to a method and system for generating paths between ingress and egress nodes over which data traffic should be routed in a packet network. In preferred exemplary embodiments of the invention paths are generated in dependence on load or congestion measures of present traffic loading in the network.

Background to the Invention

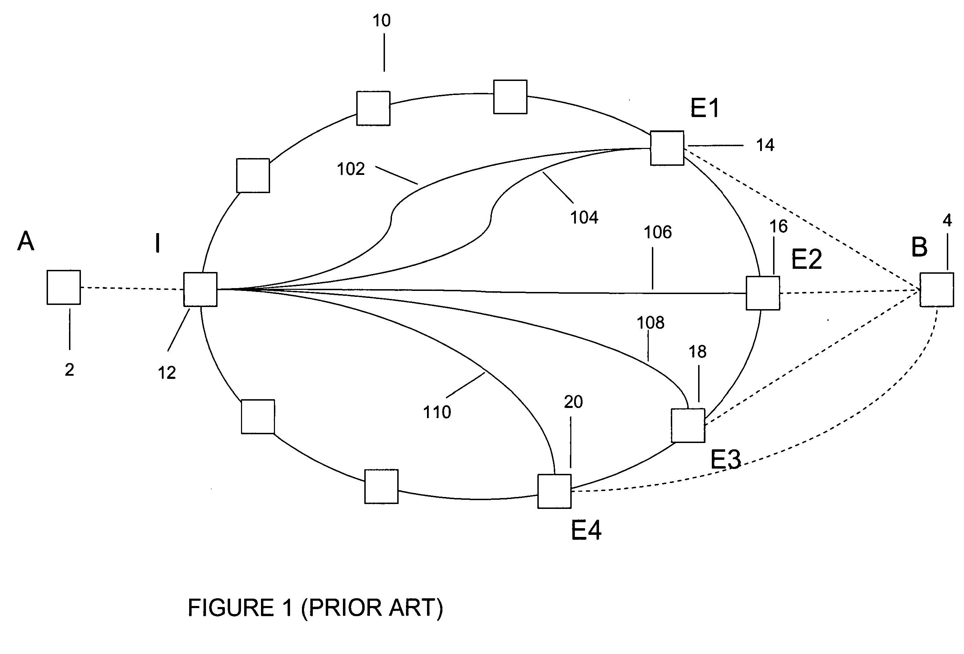

Packet networks such as Internet Protocol (IP) networks, multi-protocol label switched (MPLS) networks, or Ethernet networks are of increasing importance in next generation communications networks. Typically, and with reference to Figure 1, a packet network 10 accepts traffic at an ingress gateway node I (12) from a source node A (2) outside the network 10 and destined for destination node B (4). In order to transport the traffic to the destination node B, the network must route the traffic on to one of a number of available paths through the network destined for specific egress nodes from which the traffic can then be forwarded on in the direction of destination node B. Admission control (i.e. deciding whether to admit the data flow in the first place) and path selection (i.e. deciding which route to take through the network from an ingress node to an egress node) are typically performed by the ingress node, although may also be performed centrally by a network management element. For each ingress-egress pair (IEP) of gateway nodes, one or more paths may exist through the network infrastructure. For example, in Figure 1, multiple paths 102 and 103 exist between gateway nodes I and E1 (I-E1), whereas single paths 106, 108, and 110 exist between IEPs I-E2, I-E3, and I-E4.

The process by which traffic demand for a specific ingress-egress pair (IEP) is assigned to one or more routes across the network, which we will call routing assignment, is particularly important. Early routing systems maintained a single route for each IEP. However, this can lead to a very unbalanced load, since the distribution of traffic against IEP (the traffic matrix) is often very long-tailed with a small number of large entries and very many small ones. A major advance in IP routing was the addition of Equal Cost Multi-Path (ECMP) routing which spreads the traffic for a single IEP across all shortest path routes between them. ECMP is discussed in IETF RFC 2991. ECMP is helpful because it smoothes out the large entries in the matrix across more links thereby reducing the potential for overload. However, ECMP can only spread traffic evenly across the equal cost paths, even if these paths do not have equal capacity. For a given traffic matrix, it is often possible to find a better routing assignment than ECMP uses.

Traffic engineering is a set of tools which attempt to construct network structures and routing assignments which are sensitive to the structure of this traffic matrix. Here we are concerned with those techniques which seek to adaptively route traffic according to recently (hours, minutes, or seconds) observed load patterns. Typically we wish to route heavily loaded IEPs onto more than one route (or perhaps a particularly well provisioned route) while moving the traffic from other IEPs away from sharing with this heavy one. This may involve moving some traffic onto routes which are not the shortest possible, if that avoids congestion.

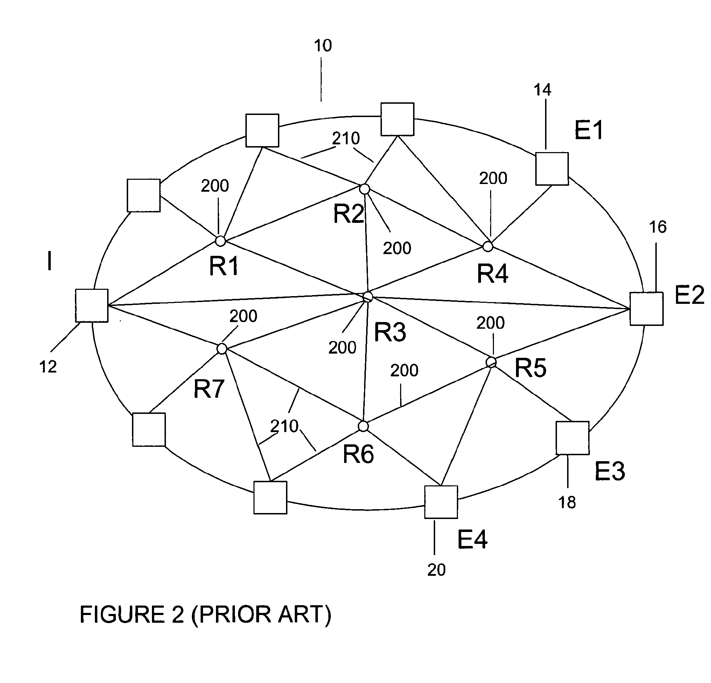

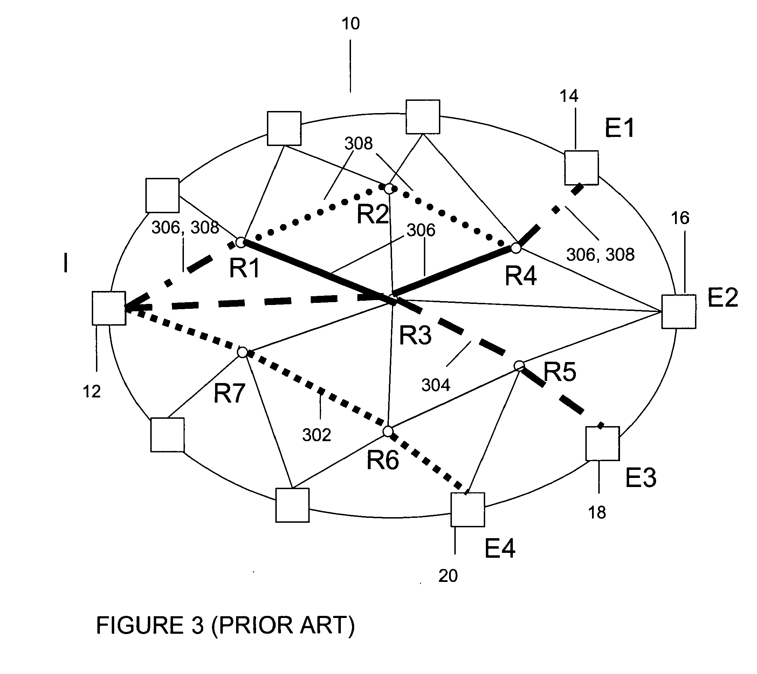

One particular issue is identifying good candidate routes. Whilst Figure 1 shows the IEPs logically across the network, in reality each path between each IEP is formed from the network infrastructure, and in particular by links between routers or switches within the network. As shown in Figure 2, a typical network comprises internal routers or switches 200 , having interconnecting links 210 therebetween, over which data traffic is transmitted. Data progresses through the network on a hop by hop basis from router/switch to router/switch, as is well known in the art. Figure 3 shows how paths between IEPs are formed from the links, and how multiple paths can share the same link. For example, a first path 302 between IEP I-E4 is formed by the links between I and R7, R7 and R6, and R6 and E4. A second path 304 for IEP I-E3 is formed by links: I-R3, R3-R5; and R5-E3. IEP I-E1 has two paths assigned to it (as shown in Figure 1), and these paths share some of the same links. For example, path 306, follows the route: I-R1-R3-R4-E1, where as path 308 follows the route I-R1-R2-R4-E1. The links I-R1 and R4-E1 are therefore shared by these two paths.

Typically, the number of available routes between an ingress and egress node grows exponentially with the number of links in the network. Experience shows that only a small number of these routes need to be used to carry all traffic. If a large number of routes can be eliminated from consideration at an early stage, then the effort the network has to put in measuring and maintaining information on which it has to base its routing assignment decisions can be reduced. At the same time it is necessary to ensure that there are always enough good routes available in a candidate path list.

This problem of finding good candidate routes for paths between IEPs has been studied within the network optimisation literature. For example, we may want to maximise the total amount of traffic across a network for given demands per IEP while satisfying the capacity constraints associated with each link in the network, or we may want to minimise the cost associated with installing additional capacity such that all demands can be carried. Both problems can be formulated as linear programming (LP) problems. A well-established technique for keeping the size of the linear program relatively small is called Candidate Path List Augmentation (described in M. Pióro and D. Medhi. Routing, Flow, and Capacity Design in Communication and Computer Networks. Morgan Kaufmann Publishers, 2004. (pp 184-192)) for the problem of minimising the cost of installing additional capacity. The idea is to start with a small linear program which captures the routing assignment problem for a small set of candidate paths. This problem is solved to optimality, and then a separate path generation algorithm is run to identify routes that should be added because they may improve the quality of the solution. The newly identified routes are then added to the linear program and the whole procedure is repeated until no improving routes are found.

Therefore, in order to solve either of the optimisation problems described above, conventionally a routing assignment step followed by a path generation step is performed. Traditionally, the linear program in the routing assignment step is solved using a standard LP-solver such as CPLEX or lp-solve. The path generation step then requires solving a shortest path problem where the link costs are the values of the dual variables associated with the capacity constraints in the routing assignment problem. Standard LP-solvers give the values of these dual variables as a natural by-product of their solution procedures.

One of the problems with the known linear programming technique is that it is difficult to apply dynamically, to find alternative paths onto which traffic can be routed which takes into account present or recent load, link failures, or the like. We are particularly interested in updating the candidate path lists whenever circumstances (e.g., traffic patterns, link failures, etc.) change. A different solution to path generation is therefore required, which does not require the conventional linear programming techniques.

Summary of Examples of the Invention

An embodiment of the present invention provides an alternative path generation technique which is able to take into account changes in network circumstances, such as link failures, or changes in traffic patterns, by making use of a congestion measure for each operational link in the network, and then applying a route finding algorithm (such as Dijkstra's shortest path algorithm as used in the conventional Open Shortest Path First (OSPF) routing protocol) to find paths, with the congestion measures input into the algorithm as the path length values. The route-finding algorithm is then able to determine candidate paths in dependence not on path length, as is conventional, but on the present load in the network, and in particular between IEPs, as measured by the congestion measures. As the congestion measures implicitly take into account present traffic load, as well as link failures, and the like, an adaptive candidate path generation technique is provided, which is able to find alternative paths for IEPs in dependence on present network conditions. Optionally, in some embodiments, the candidate paths are subject to a threshold test against a property thereof, and if the test is passed then the candidate path is implemented in the network, and becomes a path between an IEP onto which traffic can then be routed.

In view of the above, in one example embodiment the present invention provides a method of determining paths onto which data may be routed in a packet switched network, the method preferably comprising: receiving link congestion measures from nodes in the network relating to congestion on data links associated with said nodes; calculating one or more candidate paths from at least one ingress node of the network to at least one egress node in dependence on the link congestion measures; and optionally controlling the network to establish at least one of said one or more candidate paths as a path between an ingress node and an egress node on to which data traffic may be routed.

In one embodiment the calculating step makes use of a path finding algorithm which takes the link congestion measures as path lengths or weights. In one embodiment of the invention the path finding algorithm is a shortest path algorithm, such as , for example, any of the Dijkstra algorithm as used in the OSPF protocol, the Bellman-Ford algorithm, or the Constrained Shortest Path First algorithm (CSPF).

In an exemplary embodiment the link congestion measures are congestion prices determined in dependence on respective data queue sizes for a node's links.

In one example of the invention, the controlling step comprises determining a threshold value for each candidate path, and comparing the threshold value with a threshold measure, a candidate path being established if said threshold measure is met. In this example, said threshold value for a candidate path may be dependent on the congestion measures of the links which make up the path. Moreover, in one example said threshold value is a difference measure between the congestion measures of the links which make up the path and the congestion measures of the links which make up existing paths in the network. Preferably, the difference measure is an improvement measure calculated by subtracting the sum of the congestion measures of the links of a selected one of the existing paths from the sum of the congestion measures of the links of a candidate path. The improvement measure is then compared with the threshold measure to determine if the candidate path should be implemented.

Another example of the invention provides a method of operating a packet switched network, comprising the steps: admitting packet flows into the network; routing packet flows onto one of a plurality of paths between ingress nodes and egress nodes; and determining further paths between ingress nodes and egress nodes onto which packet flows may be routed, said determination being performed in accordance with any of the above described examples; and then routing packet flows onto any such paths established during said determining step.

A further example of the invention provides a method of operating a node in a packet switched network, said method comprising the steps: queuing data to be transmitted on one or more links of the node in one or more respective data queues; determining the size of the data queues; calculating at least one congestion measure for at least one link of the node in dependence on the determined size of at least one of the data queues; and sending said congestion measure to a path determination entity in said network.

In this latter example the link congestion measures may be congestion prices determined in dependence on respective data queue sizes for the node's links.

In another example of the invention, a computer program or suite of computer programs is provided so arranged such that when executed by a computer system it/they cause the computer system to operate according any of the preceding examples. In addition, there is also preferably provided a computer readable storage medium storing the computer program or at least one of the suite of computer programs.

A further example of the invention provides an apparatus for determining paths onto which data may be routed in a packet switched network, the apparatus comprising: a node interface configured to receive link congestion measures from nodes in the network, said link congestion measures relating to congestion on data links associated with said nodes; a path calculator configured to calculate one or more candidate paths from at least one ingress node of the network to at least one egress node in dependence on the link congestion measures; and a network controller that in use controls the network to establish at least one of said one or more candidate paths as a path between an ingress node and an egress node on to which data traffic may be routed.

Another embodiment provides a packet switched network, comprising: an admission controller that in use admits packet flows into the network; a path selector that in use routes packet flows onto one of a plurality of paths between ingress nodes and egress nodes; and a path generator subsystem; wherein said path selector in use routes packet flows onto any such paths established by said path generator sub-system.

A further example also provides a node in a packet switched network, said node comprising: at least one data queue in which data to be transmitted on one or more links of the node is queued; a congestion measure calculator that in use calculates at least one congestion measure for at least one link of the node in dependence on a determined size of at least one of the data queues; and a communications interface that in use sends said congestion measure to a path generator subsystem in said network.

Any of the above examples or embodiments may be combined in any combination to provide further examples, any and all of which are intended to fall within the appended claims.

Brief Description of the Drawings

Further features and advantages of embodiments of the present invention will become apparent from the following description thereof, presented by way of example only, and by reference to the accompanying drawings, wherein like reference numerals refer to like parts, and wherein: -

Figure 1 is a schematic diagram of a typical network of the prior art;
Figure 2 is a schematic diagram of the typical network of Figure 1, in more detail;
Figure 3 is a schematic diagram showing paths implemented in the network of Figure 2;
Figure 4 is a diagram illustrating a first embodiment of the present invention;
Figure 5 is a block diagram illustrating a network node of the first embodiment of the present invention;
Figure 6 is a block diagram illustrating the path generation subsystem of the first embodiment of the present invention;
Figure 7 is a flow diagram illustrating the steps performed by the network node in the first embodiment of the invention;
Figure 8 is a flow diagram illustrating the operation of the path generation subsystem of the first embodiment of the present invention; and
Figure 9 is a schematic diagram of a network illustrating additional paths created by the path generation subsystem.

Description of the Embodiments

A brief overview of an embodiment of the invention will be described next, followed by a detailed description of an embodiment.

In one embodiment, a single central management system is responsible for the path generation for all ingress egress pairs (IEPs). This management system maintains information about the network topology. Using this information, it can find an initial candidate set of paths for each IEP. For example, it can identify for each IEP the path from ingress to egress node with minimum hop count, using any shortest path algorithm.

Preferably, each node (router, switch, etc) in the network maintains a congestion price $P(l)$ for each outgoing link $l$, for example by observing the size s of the queue at the corresponding interface and applying any increasing function f to obtain $P(l) = f(s)$. The precise implementation of this may depend on the routing assignment procedure being used. At regular intervals, or whenever asked for by the management system, each node sends the most recently observed values (or, alternatively, the current value of a moving average) of the congestion prices to the management system.

The management system then uses these congestion prices as link costs in its shortest path calculations. Whenever it finds, for some IEP, a shortest path which is shorter than some chosen threshold value, and does not yet appear in the candidate list, it adds this path to the candidate list.

Using such a procedure candidate paths can be generated in dependence on the present network traffic, and/or the present network congestion. The candidate paths can then be implemented in the network, and made available to the path selection entities in the network (e.g. at the ingress nodes) for traffic to be routed on to.

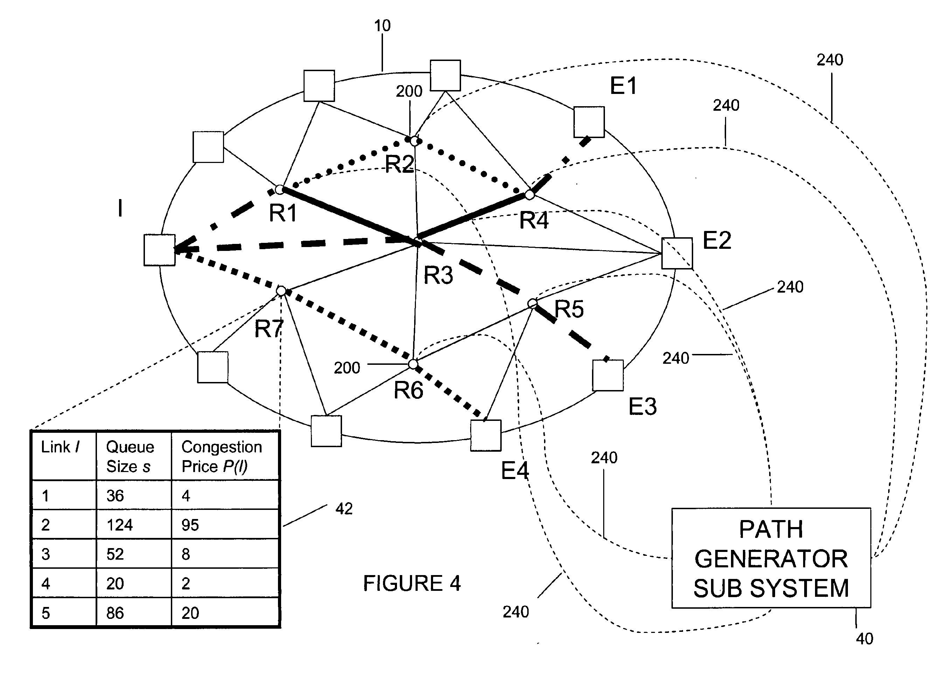

A more detailed embodiment will now be described with reference to Figures 4 to 9.

Figure 4 gives an overview of the presently described embodiment. More particularly, a network 10 is provided with routers or switches 200 providing the same network topology as previously described. However, each node 200 (being a router, switch, or the like) maintains a table 42, containing information relating to each of its links *I* output from the node. Each link into and out of the node is preferably bidirectional. For each link *I*, the node maintains a record of the queue size s for that link, and also a congestion price $P(I)$, which is derived using a congestion function $f(x)$, from the queue size s, in a manner to be described.

Additionally provided is a path generator subsystem 40, which is typically located in a network management entity. Each node 200 operationally communicates with the path generator subsystem 40 via logical connections 240, so as to send the congestion price information $P(I)$ for each link of the node to the path generator subsystem. Each node 200 may send the congestion price information to the path generation subsystem either periodically, when polled by the path generator's subsystem, or whenever a significant change occurs to the congestion price information stored in the table 42 at each node. In this latter case, the path generator subsystem 40 is as a consequence repeatedly updated as to the level of congestion in the network.

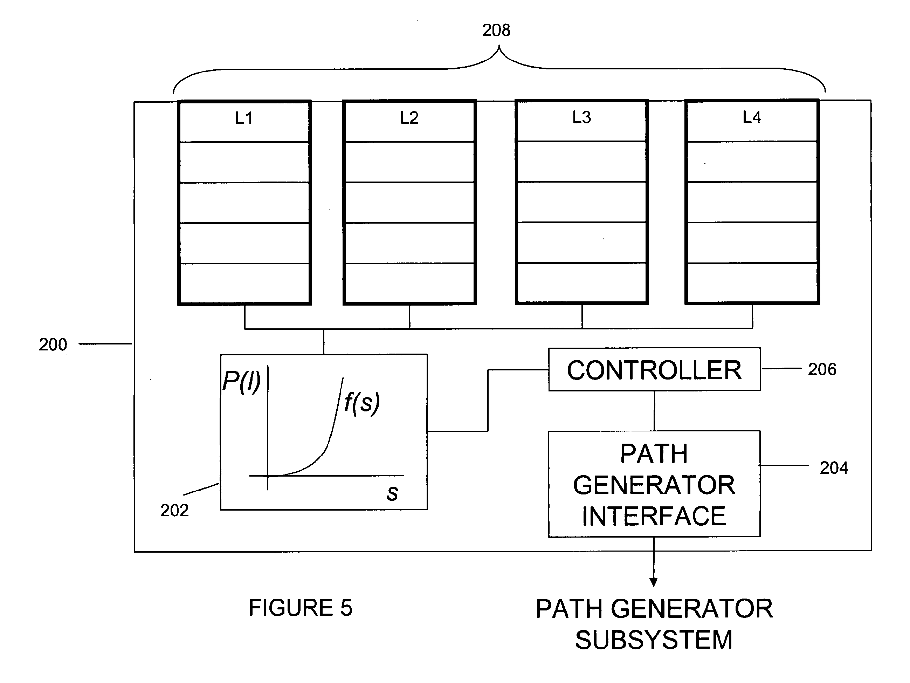

Figure 5 illustrates the components of a node 200 of the present embodiment in more detail. More particularly, each node 200 maintains a number of traffic queues 208, being one queue for each outbound link of the node. Data to be transmitted over an outbound link is stored in the traffic queues, until such time as it can be transmitted over the link.

Each node 200 also contains a controller 206, which functions to control the node in order to provide the functions to be described. In particular, the controller 206 causes the queue sizes to be determined, and the congestion price $P(I)$ to be computed for each link, via a congestion calculator 202. That is, congestion price calculator 202 has access to the queue size of the queue for each link, and is able to read the queue size therefrom, and calculate the congestion price for each link The congestion calculator stores a predetermined function $f(s)$ from which the congestion price $P(I)$ for a link is calculated i.e.:

$$P(I) = f(s).$$

The function $f(s)$ may be any increasing function, but preferably a function which is reflective of congestion in the network is preferred. In this respect, congestion on a link increases as the link approaches its capacity. When the link is operating at or below its design capacity then there will be little or no congestion on the link, and hence the congestion price should be low. However, when the link is operating close to or above its designed capacity, such that data is queued for a considerable length of time before being transmitted on the link, then the link has become congested, and the congestion price should accordingly be high. Therefore, an appropriate increasing function $f(s)$ to reflect these properties should be chosen. The function may be continuous, as shown, or discrete as appropriate. When a discrete function is used, it may conveniently be implemented in the form of a look-up table.

The controller 206 also communicates with a path generator interface 204, which is used to communicate via the logical connections 240 with the path generator subsystem 40, in order to send the congestion price per link information from the node 200 to the path generator subsystem, when required. As mentioned, this can be when the path generator subsystem 40 polls each node, or the timing for when the information is sent may be determined by the node itself. For example, the controller can monitor when the congestion price for a link has been updated, and then control the path generator interface 204 to send the updated information.

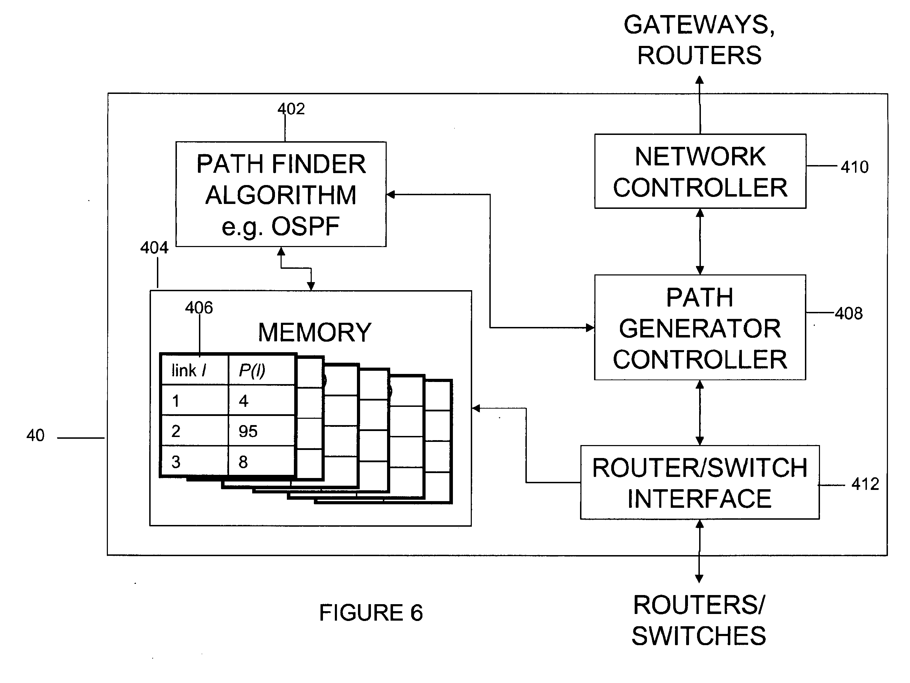

A block diagram of the path generator subsystem is shown in Figure 6. From Figure 6 it will be seen that the path generator subsystem 40 comprises a path generator controller 408, a node interface 412, and a network controller 410. Additionally provided is a path finder algorithm calculator 402, and a memory 404. The memory 404 stores congestion price information $P(I)$ for each link *I*, for each node. That is, for each node of the network, a table 406 is stored containing the congestion price information $P(I)$ for each link I of that node.

The router/switch interface 412 receives the congestion price information for each link from each node via the logical connections 240. The router/switch interface 412 then stores this information in the memory 406 as appropriate, under the control of the path generator controller 408.

The network controller 410 communicates with the gateway nodes and the internal nodes of the network, so as to configure the network nodes to set up a new path for an IEP, again as directed by the path generator controller 408.

The path finder algorithm calculator 402 operates under the control of the path generator controller 408, and is able to access the congestion price tables 406 in the memory 404, so as to use the congestion price information in the tables 406 as an input to the path finder algorithm. The path finder algorithm calculator 402 is also aware of the network topology to which the congestion prices relate. The path finder algorithm calculator 402 preferably applies a known route finding algorithm, such as, for example, Dijkstra's shortest path algorithm, commonly used in the Open Shortest Path First (OSPF) protocol, described in IETF RFC 2328. It is also possible to use a Constrained Shortest Path First (CSPF) algorithm, in order to restrict the search to routes that satisfy additional requirements with respect to, for example, hop count or operational policies. In either case, the congestion prices are used as link lengths in the path finder algorithm. The path finder algorithm calculator using the congestion prices as input calculates one or more candidate paths through the network for an IEP, and details of these paths are then passed to the path generator controller 408, for further processing, as will be described. The path generator controller 408 subsequently determines whether a candidate path should be established in the network in a manner to be described, and if so, the path generator controller 408 controls the network controller 410 to establish the path between a particular IEP.

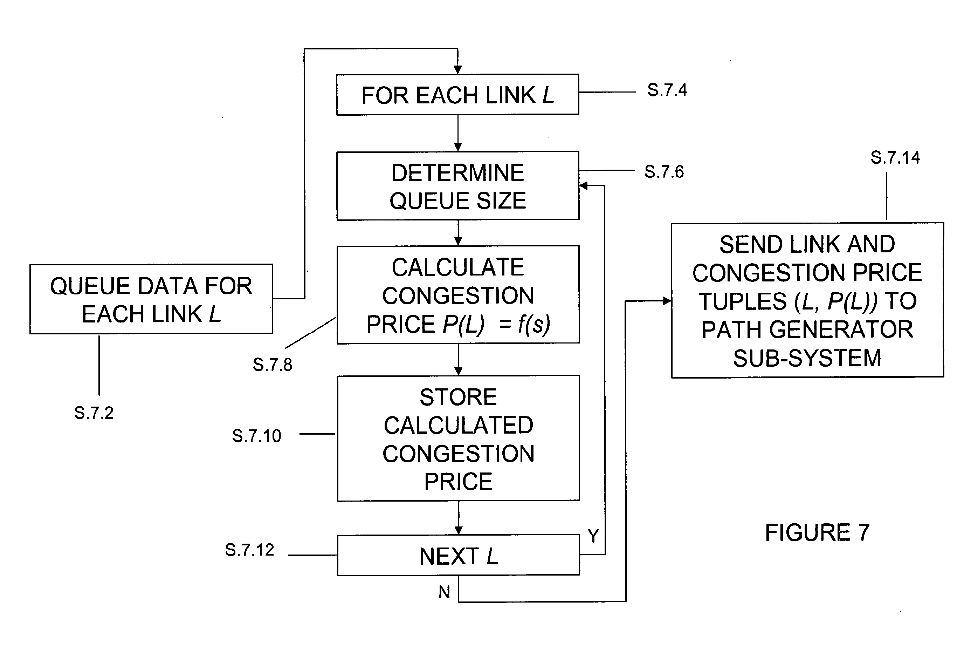

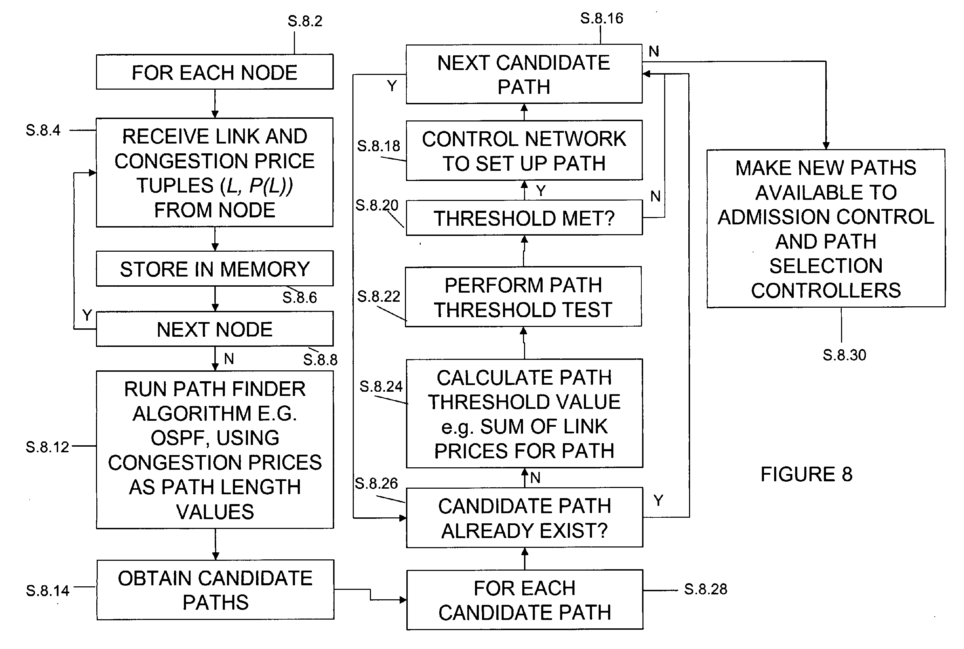

Further details of the operation of each node 200, and the path generation subsystem 40, will be given next with respect to Figures 7 and 8.

More particularly, Figure 7 is a flow diagram illustrating the operation of each node 200. As described previously, each node 200 queues data to be sent on each of its links $l$, in a respective data queue. Then, for each outbound link $l$, a FOR processing loop is commenced at step 7.4, in order for each link to be processed in turn.

Within this processing loop, firstly, at step 7.6 the queue size s is determined for the link presently being processed. The queue size s may be absolute (instantaneous) queue size at the present moment, or it may be an average queue size taken over a period of time or over a moving time window. An average measure may be preferable, since instantaneous queue size can fluctuate quite rapidly. The queue size measure s may also be based on a measurement of rate at the link and then computed by comparing the rate to the capacity of the link.

Howsoever the queue size measure s is found, the queue size s is then fed to the congestion price calculator 202, to calculate the congestion price $P(l)$ in dependence on the queue size. In particular, the queue size is applied to the congestion price calculation function, to obtain the congestion price for the link. This step is performed at step 7.8.

Once the calculated congestion price has been obtained, it is stored at step 7.10 in the table 42 maintained at each node 200. Thereafter, an evaluation is performed at step 7.12 to determine if there are any further links to be processed, and if so the next link l is selected, and processing proceeds back to step 7.6. If, on the other hand, all of the links of a node have been processed, then processing proceeds to step 7.14.

At step 7.14, the controller 206 of the node 200 controls the path generator interface 204 to send the congestion price tuples, comprising the link ID $l$, and the congestion price for the link $P(l)$ i.e. ($l$, $P(l)$), to the path generator subsystem, via the logical connection 240.

As noted previously, the node 200 repeats the process of Figure 7 repeatedly, and sends updates of the congestion prices obtained for each of its links to the path generator subsystem either when requested, periodically, or when any significant change occurs.

Figure 8 illustrates the operation of the path generator subsystem 40. The process of Figure 8 is performed repeatedly, or alternatively whenever updated congestion prices are received from one or more nodes. For example, the path generator controller 408 may decide to update the candidate path lists, and poll each node so as to cause each node to send its congestion price information. Alternatively, the nodes themselves may periodically send the congestion price information as an automatic update, or whenever a change to the congestion levels on their links occurs.

At step 8.2, assuming that the path generator controller 408 has decided to poll each node, a FOR processing loop is started to receive the congestion price information from each node. This is performed at step 8.4, wherein the link and congestion price tuples ($l$, $P(l)$) are received from the node presently being processed. This information is then stored in the memory 404 at step 8.6. Next, at step 8.8 an evaluation is performed as to whether there is a next node from which congestion price information is to be received, and if there is, processing returns back to step 8.4, in order to receive this data. On the other hand, once all of the updated congestion price information has been received from the nodes, then processing proceeds to step 8.12.

At step 8.12 the path generator controller 408 controls the path finder algorithm calculator 402 to access the congestion price data in the memory 404, and to run a suitable shortest path algorithm using the congestion prices stored in the memory as path length values. As discussed previously, suitable algorithms are the Dijkstra algorithm as used in the OSPF routing protocol, the Bellman-Ford algorithm, or the CSPF algorithm The operation of such algorithms is well known in the art, and no further discussion thereof will be undertaken.

The output from the path finder algorithm calculator 402 is a set of one or more candidate paths, each preferably indicated via a sequence of node IDs. These are obtained at step 8.14, and are passed to the path generator controller 408. It is then necessary to assess whether each candidate path is a path that should actually be established within the network, and this is performed by applying a series of tests to the path.

More particularly, at step 8.28 the path generator controller 408 starts a FOR processing loop, to process each candidate path received from the path finder algorithm calculator. The first check is to check whether the candidate path already exists, and this is performed at step 8.26. If the candidate path already exists in the network, then that means that the network paths are already optimised, and hence no further action in respect of the candidate path is required. In this case, processing proceeds to step 8.16, wherein an evaluation is performed as to whether there is another candidate path in the list obtained from the path finder algorithm calculator 402, which needs to be dealt with. If there is, the next candidate path is selected, and processing proceeds once again to step 8.26.

If it is determined at step 8.26 that the candidate path being processed does not already exist, then processing proceeds to step 8.24, wherein a path threshold value is calculated. This could be, for example, a sum of the link prices for the path, that is, the congestion prices for each link contained within the path are added together, to obtain a cumulative path cost. This path cost is then compared at step 8.22 with a threshold, or some other threshold test is performed. The threshold may be, for example, a fixed threshold i.e. a fixed path cost value, or, alternatively, it may be an adaptive threshold, for example an average path cost of paths relating to an IEP to which the path which is presently being processed relates.

As a further example, one threshold test that may be used is to compute how much better the new path is: in other words compare its "length" (i.e. the sum of its congestion measures) to the "shortest" of the existing paths (with the "length" of the existing paths being the sums of the congestion measures of their respective links). In one example it may be the case that the new path is added if it is shows some improvement, however small, over the existing paths, based on the above described improvement measurement. In a further example a path may be added if it is more than some improvement threshold e.g. 10% better than the best paths (typically the least congested) so far. In such examples it is the improvement in the congestion value for a candidate path in comparison with existing paths that is compared against a threshold, rather that the actual congestion value itself. For example, if traffic is swinging round to a new pattern and there is a lot of congestion, even the new candidate paths found might be quite congested. But if they provide an improvement over existing paths, then it may still be beneficial to implement them in the network.

It may of course also be the case that in one example of the invention the new path is added in any event, irrespective of the threshold test.

An evaluation is performed at step 8.20 to determine whether the threshold test (however this is performed as described above) is met. If this is the case, processing proceeds to step 8.18, where the path generator controller 408 forwards the path information to the network controller 410, with an instruction to set the path up in the network. The network controller 410 then controls the network nodes to set up the path in the network.

In addition, the ingress nodes, or other entity which performs path selection is informed of the existence of the path, so that traffic can be routed onto the path, as required.

Returning to step 8.20, if the threshold test is not met, then the candidate path is discarded and is not set up in the network, and processing proceeds to step 8.16, wherein the next candidate path in the list is selected. If, at step 8.16 it is determined that all candidate paths have been processed, then processing proceeds to step 8.30, wherein the new paths are made available to the admission control and path selection controllers, as mentioned.

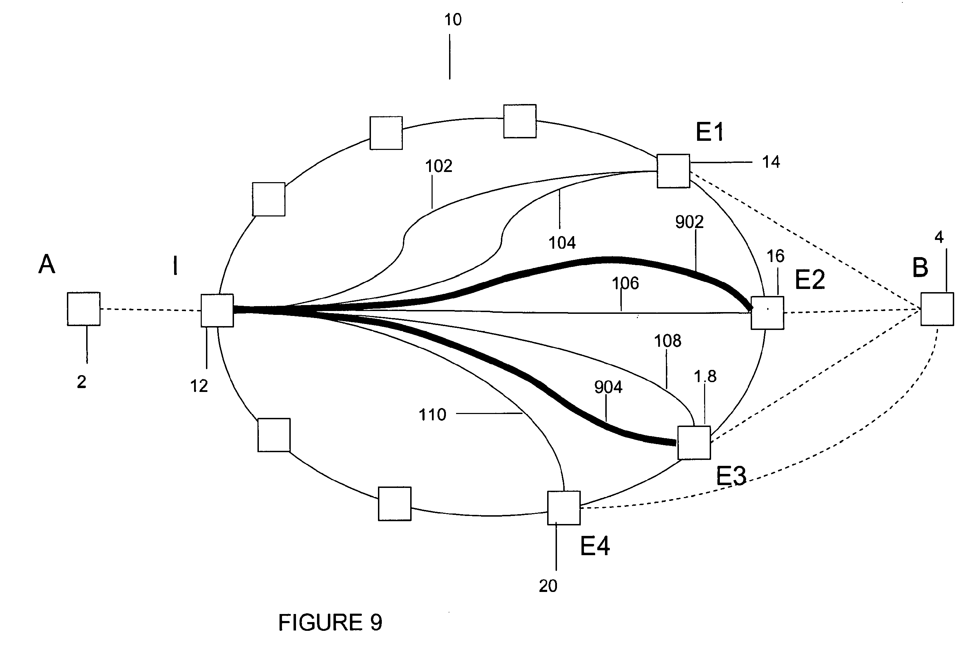

Figure 9 shows the network 10 with two additional new paths implemented, being paths 902 and 904. Path 902 is between IEP I-E2, whereas path 904 is an additional path for IEP I-E3. As mentioned, these paths are available to the admission control and path selection controllers in the network, which may be located at the ingress nodes, or in a management subsystem. Admission control and path selection is generally beyond the scope of this description, suffice to say that the new paths that are generated are made available to the admission control and path selection controllers so that they can be taken into account during the admission control and path selection process. Preferably, admission control and path selection is performed in dependence on congestion measures of congestion on each path, such as, for example, described in the applicant's prior patent applications EP 08251265.8 "Admission Control in a Packet Network", and EP 08251231.0 "Admission Control and Routing in a Packet Network", both filed 31 March 2008, and in particular the respective first embodiments of each, the descriptions of which are incorporated herein be reference.. By so doing, then not only can path generation be performed in dependence on a congestion measure in the network, but admission control and path selection is also performed in dependence on a congestion measure. Thus, all of path generation, admission control, and path selection can be integrated so as to take into account the present state of the network, and in particular whether the network is presently congested.

Various modifications either by way of addition, deletion, or substitution may be made to the above described embodiments to provide further embodiments, any and all of which are intended to be encompassed by the appended claims.

**Claims**

1. A method of determining paths onto which data may be routed in a packet switched network, the method comprising:

    receiving link congestion measures from nodes in the network relating to congestion on data links associated with said nodes;

calculating one or more candidate paths from at least one ingress node of the network to at least one egress node in dependence on the link congestion measures; and

controlling the network to establish at least one of said one or more candidate paths as a path between an ingress node and an egress node on to which data traffic may be routed.

2. A method according to claim 1, wherein the calculating step makes use of a path finding algorithm which takes the link congestion measures as path lengths or weights.

3. A method according to claim 2, wherein the path finding algorithm is a shortest path finding algorithm.

4. A method according to any of the preceding claims, wherein the link congestion measures are congestion prices determined in dependence on respective data queue sizes for a node's links.

5. A method according to any of the preceding claims, wherein the controlling step comprises determining a threshold value for each candidate path, and comparing the threshold value with a threshold measure, a candidate path being established if said threshold measure is met.

6. A method according to claim 5, wherein said threshold value for a candidate path is dependent on the congestion measures of the links which make up the path.

7. A method according to claim 6, wherein said threshold value is a difference measure between the congestion measures of the links which make up the path and the congestion measures of the links which make up existing paths in the network.

8. A method of operating a packet switched network, comprising the steps:

admitting packet flows into the network;
routing packet flows onto one of a plurality of paths between ingress nodes and egress nodes; and
determining further paths between ingress nodes and egress nodes onto which packet flows may be routed, said determination being performed in accordance with any of the preceding claims; and then
routing packet flows onto any such paths established during said determining step.

9. A method of operating a node in a packet switched network, said method comprising the steps:

queuing data to be transmitted on one or more links of the node in one or more respective data queues;
determining the size of the data queues;
calculating at least one congestion measure for at least one link of the node in dependence on the determined size of at least one of the data queues; and
sending said congestion measure to a path determination entity in said network.

10. A method according to claim 9, wherein the link congestion measures are congestion prices determined in dependence on respective data queue sizes for the node's links.

11. A computer program or suite of computer programs so arranged such that when executed by a computer system it/they cause the computer system to operate according to the method of any of the preceding claims.

12. A computer readable storage medium storing the computer program or at least one of the suite of computer programs according to claim 11.

13. An apparatus for determining paths onto which data may be routed in a packet switched network, the apparatus comprising:

a node interface configured to receive link congestion measures from nodes in the network, said link congestion measures relating to congestion on data links associated with said nodes;
a path calculator configured to calculate one or more candidate paths from at least one ingress node of the network to at least one egress node in dependence on the link congestion measures; and
a network controller that in use controls the network to establish at least one of said one or more candidate paths as a path between an ingress node and an egress node on to which data traffic may be routed.

14. A packet switched network, comprising:

an admission controller that in use admits packet flows into the network;
a path selector that in use routes packet flows onto one of a plurality of paths between ingress nodes and egress nodes; and
a path generator subsystem, being an apparatus according to claim 13;
wherein said path selector in use routes packet flows onto any such paths established by said path generator sub-system.

**15.** A node in a packet switched network, said node comprising:

at least one data queue in which data to be transmitted on one or more links of the node is queued;

a congestion measure calculator that in use calculates at least one congestion measure for at least one link of the node in dependence on a determined size of at least one of the data queues; and

a communications interface that in use sends said congestion measure to a path generator sub-system in said network.

FIGURE 1 (PRIOR ART)

FIGURE 2 (PRIOR ART)

FIGURE 3 (PRIOR ART)

| Link $l$ | Queue Size $s$ | Congestion Price $P(l)$ |
|---|---|---|
| 1 | 36 | 4 |
| 2 | 124 | 95 |
| 3 | 52 | 8 |
| 4 | 20 | 2 |
| 5 | 86 | 20 |

FIGURE 4

PATH GENERATOR SUB SYSTEM

EP 2 237 495 A1

208

L1　L2　L3　L4

200

202

$P(l)$

$f(s)$

$s$

CONTROLLER　206

PATH
GENERATOR
INTERFACE　204

PATH GENERATOR SUBSYSTEM

FIGURE 5

GATEWAYS,
ROUTERS

402

PATH FINDER
ALGORITHM
e.g. OSPF

404

NETWORK
CONTROLLER — 410

406

MEMORY

| link $l$ | $P(l)$ |
|----------|--------|
| 1 | 4 |
| 2 | 95 |
| 3 | 8 |

PATH
GENERATOR
CONTROLLER — 408

40

ROUTER/SWITCH
INTERFACE — 412

FIGURE 6

ROUTERS/
SWITCHES

EP 2 237 495 A1

FOR EACH LINK *L* ——— S.7.4

DETERMINE QUEUE SIZE ——— S.7.6

S.7.14

QUEUE DATA FOR EACH LINK *L*

CALCULATE CONGESTION PRICE *P(L)* = *f(s)*

SEND LINK AND CONGESTION PRICE TUPLES (*L, P(L)*) TO PATH GENERATOR SUB-SYSTEM

S.7.8

S.7.2

STORE CALCULATED CONGESTION PRICE

S.7.10

S.7.12 ——— NEXT *L*

Y

N

FIGURE 7

FOR EACH NODE — S.8.2

NEXT CANDIDATE PATH — S.8.16

S.8.4 — RECEIVE LINK AND CONGESTION PRICE TUPLES (*L, P(L)*) FROM NODE

S.8.18 — CONTROL NETWORK TO SET UP PATH

MAKE NEW PATHS AVAILABLE TO ADMISSION CONTROL AND PATH SELECTION CONTROLLERS — S.8.30

STORE IN MEMORY

S.8.6

S.8.20 — THRESHOLD MET?

Y — NEXT NODE — N

S.8.8

S.8.22 — PERFORM PATH THRESHOLD TEST

S.8.12 — RUN PATH FINDER ALGORITHM E.G. OSPF, USING CONGESTION PRICES AS PATH LENGTH VALUES

S.8.24 — CALCULATE PATH THRESHOLD VALUE e.g. SUM OF LINK PRICES FOR PATH

FIGURE 8

S.8.26 — CANDIDATE PATH ALREADY EXIST?

S.8.14 — OBTAIN CANDIDATE PATHS

FOR EACH CANDIDATE PATH — S.8.28

EP 2 237 495 A1

17

FIGURE 9

EP 2 237 495 A1

EUROPEAN SEARCH REPORT

Application Number

EP 09 25 0991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/118027 A1 (LEE BYOUNG-JOON [CA] ET AL) 26 June 2003 (2003-06-26) * paragraphs [0009], [0014], [0015], [0022], [0035], [0037], [0038], [0050]; figures 1-5 * ----- | 1-15 | INV. H04L12/56 |
| A | US 2002/176363 A1 (DURINOVIC-JOHRI SANJA [US] ET AL) 28 November 2002 (2002-11-28) * paragraphs [0003], [0008] - [0014], [0021], [0023], [0026], [0035]; figures 1,2,4,5 * ----- | 1-15 | |
| A | US 7 296 087 B1 (ASHWOOD SMITH PETER J [CA]) 13 November 2007 (2007-11-13) * column 2, line 18 - column 3, line 44; figures 1,2 * ----- | 1-15 | |

TECHNICAL FIELDS SEARCHED (IPC)

H04L

The present search report has been drawn up for all claims

| Place of search | Date of completion of the search | Examiner |
|---|---|---|
| Munich | 16 July 2009 | Nold, Michael |

EPO FORM 1503 03.82 (P04C01)

**ANNEX TO THE EUROPEAN SEARCH REPORT
ON EUROPEAN PATENT APPLICATION NO.**

EP 09 25 0991

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2009

| Patent document cited in search report | | Publication date | Patent family member(s) | Publication date |
|---|---|---|---|---|
| US 2003118027 | A1 | 26-06-2003 | NONE | |
| US 2002176363 | A1 | 28-11-2002 | NONE | |
| US 7296087 | B1 | 13-11-2007 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 08251265 A

- EP 08251231 A

**Non-patent literature cited in the description**

- **M. Pióro ; D. Medhi.** Routing, Flow, and Capacity Design in Communication and Computer Networks. Morgan Kaufmann Publishers, 2004, 184-192